# EUROPÄISCHE PATENTSCHRIFT

(11) **EP 1 186 148 B1**
(45) Veröffentlichungstag und Bekanntmachung des Hinweises auf die Patenterteilung: **11.12.2002**
(21) Anmeldenummer: 99924644.0
(22) Anmeldetag: 18.06.1999
(51) Int. Cl.: H04L 29/06, G02B 27/01

(54) **ÜBERMITTLUNG UND DARSTELLUNG VON VIDEODATEN**
TRANSMISSION AND DISPLAY OF VIDEO DATA
TRANSMISSION ET AFFICHAGE DE DONNEES VIDEO

(43) Veröffentlichungstag der Anmeldung: 13.03.2002
(73) Patentinhaber: Swisscom Mobile AG, 3050 Bern (CH)
(72) Erfinder: RITTER, Rudolf, CH-3052 Zollikofen (CH); LAUPER, Eric, CH-3012 Bern (CH)
(74) Vertreter: BOVARD AG - Patentanwälte
(86) Internationale Anmeldenummer: CH9900267
(87) Internationale Veröffentlichungsnummer: WO00079759

(56) Entgegenhaltungen:
- WO-A-94/09472
- US-A- 4 513 317

## Beschreibung

Die vorliegende Erfindung betrifft ein System und ein Verfahren für die Übermittlung und Darstellung von Videodaten sowie dafür geeignete Vorrichtungen. Insbesondere betrifft die vorliegende Erfindung ein System und ein Verfahren für die Übermittlung und Darstellung von Videodaten sowie dafür geeignete Vorrichtungen gemäss dem Oberbegriff des jeweiligen unabhängigen Anspruchs 1, 7 beziehungsweise 13.

Insbesondere mit der Verbreitung des Internets wurde es immer beliebter, Videodaten, das heisst Files mit digitalen Daten, die mit geeigneten Wiedergabemitteln einem interessierten Benutzer als bewegte Bilder dargestellt werden können, über das Internet anzubieten, vom Internet herunterzuladen und auf dem Bildschirm eines Personal Computers darzustellen oder in einem Datenspeicher eines Personal Computers abzuspeichern. Um die benötigten Übertragungszeiten und Speicherkapazitäten für die digitalen Videodaten zu reduzieren werden die Videodaten typischerweise in komprimierter Form gespeichert und übertragen und vor oder während der Wiedergabe dekomprimiert. Verschiedene Standards für die Speicherung, respektive Komprimierung/Dekomprimierung von Videodaten, beispielsweise die verschiedenen MPEG-Standards (Moving Pictures Expert Group), sind bereits verfügbar. Dennoch werden die Übertragungszeiten von Videodaten von vielen Benutzern als zu langsam betrachtet. Es wird zudem bemängelt, dass man insbesondere beim gleichzeitigen Herunterladen und sichtbaren Wiedergeben von Videodaten auf festinstallierte Personal Computer angewiesen ist.

In der Patentschrift US 4513317 wird ein System zur Aufnahme und Betrachtung von Videodaten beschrieben, in welchem sowohl die Fernsehaufnahmekamera als auch die Fernsehvideoanzeige mit einer wählbaren hohen oder tiefen Auflösung, das heisst mit einem umschaltbaren feinen oder groben Elektronenstrahl, betrieben werden können. Gemäss US 4513317 wird bei der Fernsehvideoanzeige mittels eines Augenpositionsbestimmungsmoduls die Blickrichtung des Betrachters bestimmt und die bestimmte Blickrichtung zur Fernsehaufnahmekamera übertragen. Gemäss US 4513317 wird die Fernsehaufnahmekamera mittels einer Kämerasteuerung in einem vordefinierten Bereich um den Bildpunkt, auf den die bestimmte Blickrichtung fällt, mit hoher Auflösung betrieben, währenddem die Aufnahme in den restlichen Bereichen mit niedriger Auflösung erfolgt. Gebiete mit hoher Auflösung und Gebiete mit niedriger Auflösung werden der Fernsehvideoanzeige durch die Fernsehaufnahmekamera gemäss US 4513317 mit unterschiedlichen Spannungswerten im Videosignal angezeigt. Auf Grund dieser unterschiedlichen Spannungswerte werden die von der Fernsehvideoanzeige empfangenen Videosignale gemäss US 4513317 entsprechend mit hoher, respektive niedriger Auflösung angezeigt

Es ist eine Aufgabe dieser Erfindung, ein neues und besseres System, ein neues und besseres Verfahren und geeignete Vorrichtungen für die Übermittlung und Darstellung von Videodaten vorzuschlagen, welche insbesondere bei der Übertragung über ein Telekommunikationsnetz kürzere Übertragungszeiten ermöglichen.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.

Im System für die Übermittlung und Darstellung von Videodaten, welches eine Videozentrale mit einem Kommunikationsmodul sowie ein Telekommunikationsnetz mit mindestens einem damit verbundenen Kommunikationsendgerät umfasst, wobei die Videozentrale mittels dem Kommunikationsmodul Videodaten über das Telekommunikationsnetz an ein Kommunikationsendgerät übertragen kann, wobei dieses Kommunikationsendgerät mindestens eine Videoanzeigevorrichtung umfasst, welche empfangene Videodaten für den Benutzer des Kommunikationsendgeräts sichtbar darstellt und welche ein Augenpositionsbestimmungsmodul umfasst, welches aktuelle Augenpositionen des Benutzers bestimmt, und wobei das Kommunikationsendgerät ein Augenpositionsrückmeldemodul umfasst, welches die bestimmten aktuellen Augenpositionen an die Videozentrale überträgt, wird dieses Ziel durch die Erfindung insbesondere dadurch erreicht, dass die Videozentrale eine Datenbank und/oder einen File-Server mit digitalen Videodaten umfasst, dass die Videoanzeigevorrichtung eine Virtuelle Retinale Anzeigevorrichtung (Virtual Retinal Display, VRD) ist, welche den empfangenen Videodaten entsprechende Bildsignale auf die Retina des Benutzers projiziert, und dass die Videpzentrale ein Videofiltermodul umfasst, welches die Videodaten vor deren Übermittlung auf Grund empfangener aktueller Augenpositionen so filtert, dass den Videodaten entsprechende äussere Bildbereiche, welche auf der Retina ausserhalb der Fovea protiziert werden, eine geringere Auflösung aufweisen als den Videodaten entsprechende innere Bildbereiche, welche auf die Fovea der Retina projiziert werden, und dass die gefilterten Videodaten dementsprechend eine geringere Datenmenge enthalten als ungefilterte Videodaten. Der Vorteil dieses Systems und dem entsprechenden Verfahren besteht darin, dass eine bestimmte Eigenschaft des menschlichen Auges, nämlich die Tatsache, dass ein kleiner Bereich der Retina, der einen Sehwinkel von ungefähr 2° ümfasst, die sogenannte Fovea, das schärfste Sehvermögen aufweist, so ausgenutzt werden kann, dass die zu übertragende Datenmenge drastisch reduziert werden kann.

In einer Ausführungsvariante umfasst das Telekommunikationsnetz ein Mobilnetz, beispielsweise ein Mobilfunknetz für die mobile Telefonie, zum Beispiel ein GSM- oder UMTS-Netz, und die Kommunikationsendgeräte sind Mobilfunkgeräte, beispielsweise ein Mobilfunktelefon oder ein kommunikationsfähiger Laptop oder Palmtop Computer. Dies hat den Vorteil, dass mobile Benutzer Videodaten von der Videozentrale beziehen und mittels der Videoanzeigevorrichtung ihrer Mobilgeräte betrachten können, wobei die Videozentrale nicht direkt mit dem Mobilnetz verbunden sein muss, sondern über geeignete Netzwerkeinheiten, wie beispielsweise ein Mobile Switching Center (MSC) oder ein Short Message Service Center (SMSC), über das Mobilnetz erreicht werden kann.

In einer Ausführungsvariante umfasst das Videofiltermodul eine Ausschnittsfunktion, welche mindestens gewisse der Videodaten, die den oben genannten äusseren Bildbereichen entsprechen, herausfiltert, so dass der den gefilterten Videodaten entsprechende Bildbereich ein Ausschnitt aus dem den ungefilterten Videodaten entsprechenden Bildbereich ist, welcher Ausschnitt mindestens den inneren Bildbereich enthält. Dies hat insbesondere bei einem grossen Gesamtbildbereich den Vorteil, dass nur diejenigen Videodaten mit einer hohen Auflösung übertragen werden müssen, die vom Benutzer im Detail betrachtet werden.

In einer Ausführungsvariante umfasst die Videozentrale ein Vorausbestimmungsmodul, welches durch das Augenpositionsbestimmungsmodul bestimmte Augenpositionen abspeichert, und welches eine nächste Augenposition auf Grund dieser abgespeicherten Augenpositionen vorausbestimmt. Dies hat den Vorteil, dass die Anzahl der Rückmeldungen von Augenpositionen an die Videozentrale, insbesondere bei kontinuierlicher Änderung der Augenpositionen des Benutzers, reduziert werden kann, wobei sie beispielsweise bei sprunghafter Änderung der Augenpositionen erhöht werden kann. In einer weiteren Variante kann bei der Vorausbestimmung einer nächsten Augenposition zudem der Inhalt der Videodaten berücksichtigt werden, so dass beispielsweise die Änderung der Augenposition mit der Bewegung von grossen und/oder zentralen Objekten korreliert.

In einer Ausführungsvariante nimmt ein Korrekturmodul Korrekturwerte vom Benutzer entgegen, speichert entgegengenommene Korrekturwerte ab, und korrigiert durch das Augenpositionsbestimmungsmodul bestimmte Augenpositionen mit abgespeicherten Korrekturwerten. Dies hat den Vorteil, dass die Übereinstimmung ermittelter Augenpositionen mit der Position der Fovea des Benutzers vom Benutzer eingestellt werden kann, indem die Korrekturwerte so eingegeben werden, dass der Bildbereich mit der grössten Auflösung tatsächlich auf die Fovea projiziert wird.

Nachfolgend wird eine Ausführung der vorliegenden Erfindung anhand eines Beispieles beschrieben. Das Beispiel der Ausführung wird durch folgende einzige beigelegte Figur illustriert:

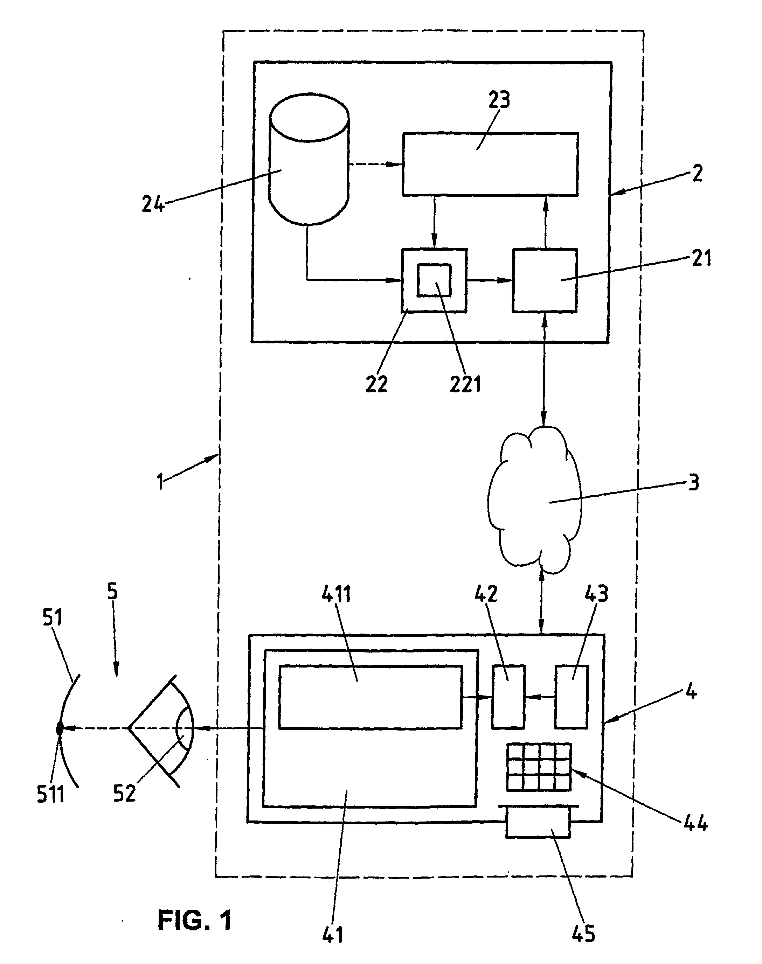

Figur 1 zeigt ein Blockdiagramm des Systems, welches schematisch eine Videozentrale darstellt, die über ein Telekommunikationsnetz mit einem Kommunikationsendgerät verbunden ist, welches eine Videoanzeigevorrichtung umfasst, die Videodaten auf die Retina eines Auges projiziert.

In der Figur 1 bezieht sich die Bezugsziffer 1 auf ein System für die Übermittlung und Darstellung von Videodaten, das heisst digitale Datenfiles, deren Inhalt mit geeigneten Wiedergabemitteln einem interessierten Benutzer als bewegte Bilder dargestellt werden können, in welchem System 1 diese Videodaten von einer Videozentrale 2 bezogen und über ein Telekommunikationsnetz 3 an ein Kommunikationsendgerät 4 übermittelt werden, wo durch eine Videoanzeigevorrichtung 41 des Kommunikationsendgeräts 4 den Videodaten entsprechende Bildsignale auf die Retina 51 des Auges 5 des Benutzers des Kommunikationsendgeräts 4 projiziert werden.

Eine Videoanzeigevorrichtung 41, die Bildsignale direkt auf die Retina 51 eines Betrachters projizieren kann, eine sogenannte Virtuelle Retinale Anzeigevorrichtung (Virtual Retinal Display, VRD), wurde in den Patentanmeldungen WO 94/09472 und WO 97/37339 beschrieben. Diese Virtuellen Retinalen Anzeigevorrichtungen können über ein Videodateninterface mit Videodaten versorgt werden, beispielsweise in Form eines RGB-Signals, eines NTSC-Signals, eines VGA-Signals oder eines anderen formatierten farbigen oder monochromen Video- oder Grafiksignals. Der Fachmann wird verstehen, dass es vorteilhaft sein kann, die in den erwähnten Patentschriften WO 94/09472 und WO 97/37339 beschriebene Virtuelle Retinale Anzeigevorrichtung, respektive das dort beschriebene Videodateninterface, so anzupassen, dass es auch andere Formate von Fernsehsignalen und insbesondere digitale Videodaten effizient entgegennehmen kann. Mittels eines nicht dargestellten Schnittstellenmoduls können Fernsehsignale und Videodaten aber auch geeignet an die Videoschnittstelle angepasst werden, respektive erhaltene Videodaten so umgewandelt werden, dass sie an die Videoschnittstelle angelegt werden können.

Die Videoanzeigevorrichtung 41 und die weiteren Komponenten des Kommunikationsendgeräts 4 können in einem gemeinsamen oder in separaten Gehäusen implementiert werden, wobei die Videoanzeigevorrichtung 41 in einem ersten Gehäuse beispielsweise über eine drahtgebundene oder über eine drahtlose Schnittstelle mit Komponenten im zweiten Gehäuse verbunden wird.

Ein Benutzer des Kommunikationsendgeräts 4 kann mittels diesem Kommunikationsendgerät 4 Videodaten über das Telekommunikationsnetz 3 von der Videozentrale 2 anfordern und beziehen. Die Videozentrale 2 basiert beispielsweise auf einem handelsüblichen Kommunikations-Server, der über ein Kommunikationsmodul 21 mit den nötigen Hard- und Softwarekomponenten verfügt um über Telekommunikationsnetze 3 mit Kommunikationsendgeräten 4 zu kommunizieren. Das Telekommunikationsnetz 3 umfasst beispielsweise ein Festnetz, zum Beispiel das öffentliche geschaltete Telefonnetz oder ein auf dem Internet Protokoll (IP) basierendes Netz, und/oder ein Mobilfunknetz, zum Beispiel ein GSM- oder UMTS-Netz, mit welchem Mobilfunknetz die Videozentrale 2 beispielsweise über nicht dargestellte Netzwerkeinheiten verbunden ist, zum Beispiel über ein Mobile Switching Center (MSC) oder eine Kurzmeldungsdienstzentrale (Short Message Service Center, SMSC). In der Ausführungsvariante, in der das Telekommunikationsnetz 3 ein Mobilfunknetz umfasst, sind mindestens gewisse der Kommunikationsendgeräte 4 Mobilfunkgeräte, beispielsweise Mobilfunktelefone oder kommunikationsfähige Laptop oder Palmtop Computers, welche beispielsweise unter Zuhilfenahme von SMS-Meldungen (Short Message Services), USSD-Meldungen (Unstructured Supplementary Services Data), GPRS-Diensten (Generalized Packet Radio Service) oder gemäss einem geeigneten Protokoll über den Nutzkanal Daten über das Mobilfunknetz austauschen können.

Auswahlbefehle und Instruktionen, die vom Benutzer des Kommunikationsendgeräts 4 mittels dessen Bedienungselementen 44 eingegeben und über das Telekommunikationsnetz 3 an die Videozentrale 2 übermittelt werden, werden dort vom Kommunikationsmodul 21 entgegengenommen und weiterverarbeitet, so dass beispielsweise vom Benutzer angeforderte Videodaten in einer Datenbank 24 oder von einem File-Server der Videozentrale 2 bezogen und über das Telekommunikationsnetz 3 an das Kommunikationsendgerät 4 des Benutzers übertragen werden. Der Benutzer kann beispielsweise mittels eines Browsers, zum Beispiel ein Internet-Browser für den direkten Zugriff auf das Internet oder ein Browser basierend auf WAP (Wireless Application Protocol) die Titel von verfügbaren Videodaten durchsehen und gewünschte Videodaten anfordern und beispielsweise die Übermittlung der gewünschten Videodaten pausieren, rückwärts- und vorwärtsspulen, wiederstarten und abbrechen. Die Datenbank 24, respektive der File-Server, kann zusammen mit anderen Komponenten der Videozentrale 2 auf einem gemeinsamen oder auf einem separaten Computer implementiert werden. Je nach der Ausführung des oben erwähnten Videodateninterfaces der Virtuellen Retinalen Anzeigevorrichtung 41 kann das Kommunikationsendgerät 4 ein nicht dargestelltes (oben erwähntes) Schnittstellenmodul umfassen, welches Schnittstellenmodul die von der Videozentrale 2 erhaltenen Videodaten geeignet an das Videodateninterface anpasst, respektive erhaltene Videodaten so umwandelt, dass sie an das Videodateninterface angelegt werden können. Eine für das Videodateninterface der Virtuellen Retinalen Anzeigevorrichtung geeignete Anpassung der Videodaten kann auch in der Videozentrale 2 erfolgen.

Wie in der Figur 1 schematisch dargestellt ist, umfasst die Videoanzeigevorrichtung 41 ein Augenpositionsbestimmungsmodul 411, welches aktuelle Augenpositionen des Betrachters bestimmen und über die oben erwähnte, oder über eine zusätzliche drahtgebundene oder drahtlose Schnittstelle an ein Augenpositionsrückmeldemodul 42 des Kommunikationsendgeräts 4 leiten kann. Ein Augenpositionsbestimmungsmodul (Eye Tracker), welches aktuelle Augenpositionen basierend auf der Position der Pupille 52 eines Betrachters bestimmt, wurde ebenfalls in der oben erwähnten Patentanmeldung WO 94/09472 beschrieben und kann vom Fachmann so erweitert werden, dass die bestimmte Augenposition über eine geeignete Schnittstelle für Komponenten ausserhalb der Videoanzeigevorrichtung 41 verfügbar ist; je nach Ausführung können Werte für beide Augen verfügbar gemacht werden. Das Augenpositionsrückmeldemodul 42 des Kommunikationsendgeräts 4, beispielsweise ein programmiertes Softwaremodul, das auf einem Prozessor des Kommunikationsendgeräts 4 ausgeführt wird, übermittelt bestimmte aktuelle Augenpositionen des Betrachters unter Zuhilfenahme von Kommunikationsdiensten des Kommunikationsendgeräts 4 über das Telekommunikationsnetz 3 an die Videozentrale 2. In der Videozentrale 2 werden die übermittelten aktuellen Augenpositionen vom Kommunikationsmodul 21 entgegengenommen und an das Videofiltermodul 22 geleitet.

Im Videofiltermodul 22, welches beispielsweise als programmiertes Softwaremodul und/oder mit einem geeigneten Signalverarbeitungsprozessor ausgeführt werden kann, werden die zu übertragenden Videodaten auf Grund empfangener aktueller Augenpositionen des betreffenden Benutzers so gefiltert, dass den genannten Videodaten entsprechende äussere Bildbereiche, welche durch die Virtuelle Retinale Anzeigevorrichtung 41 auf der Retina 51 des Benutzers ausserhalb der Fovea 511 projiziert werden, eine geringere Auflösung aufweisen als diesen Videodaten entsprechende innere Bildbereiche, welche auf die Fovea 511 der Retina 51 projiziert werden. Dabei wird die bestimmte Eigenschaft des menschlichen Auges 5, nämlich die Tatsache, dass ein kleiner Bereich der Retina 51, der einen Sehwinkel von ungefähr 2° umfasst, die sogenannte Fovea 511, das schärfste Sehvermögen aufweist, so ausgenutzt, dass nur die Bildbereiche, die tatsächlich auf die Fovea 511 projiziert werden, in ihrer, möglicherweise detailreichen, hohen Auflösung übertragen werden, während die Auflösung, respektive der Detailgehalt, von Bildbereichen, die ausserhalb der Fovea 511 projiziert werden, gefiltert wird und dadurch die zu übertragende Datenmenge für gefilterte Videodaten im Vergleich zu ungefilterten Videodaten drastisch reduziert werden kann.

In einer Ausführungsvariante umfasst das Videofiltermodul 22 eine Ausschnittsfunktion 221, welche Videodaten so filtern kann, dass basierend auf aktuellen Augenpositionen gewisse den Videodaten entsprechende Bildbereiche herausgefiltert werden. So können beispielsweise mindestens gewisse Videodaten, die einem definierten Teil der oben genannten äusseren Bildbereiche entsprechen, herausgefiltert werden, so dass der den gefilterten Videodaten entsprechende Bildbereich ein Ausschnitt aus dem den ungefilterten Videodaten entsprechenden Bildbereich ist, wobei dieser Ausschnitt mindestens den oben genannten inneren Bildbereich enthält. Dadurch müssen nur diejenigen Videodaten übertragen werden, die Bildbereichen entsprechen, die vom Benutzer im Detail betrachtet werden, was insbesondere bei grossen Gesamtbildbereichen die zu übertragende Datenmenge für gefilterte Videodaten im Vergleich zu ungefilterten Videodaten drastisch reduziert.

Wenn die gefilterten Videodaten von der Videozentrale 2 über das Telekommunikationsnetz 3 an das Kommunikationsendgerät 4 übertragen und dort von der Virtuelle Retinale Anzeigevorrichtung 41 auf die Retina 51 des betreffenden Benutzers projiziert werden, kann der Benutzer korrigierend eingreifen, wenn der innere Bildbereich mit der hohen Auflösung, respektive dem gegebenenfalls hohen Detailgehalt, nicht auf die Fovea 511 projiziert wird, das heisst, wenn das projizierte Bild vom Benutzer nicht als scharf projiziert wahrgenommen wird. Für diesen Zweck umfasst das Kommunikationsendgerät 4 ein Korrekturmodul 43, welches vom Benutzer beispielsweise mittels der Bedienungselemente 44, zum Beispiel mit links-, rechts-, hinauf- und hinunterweisenden Pfeiltasten, eingegebene Korrekturwerte, beispielsweise horizontale und vertikale Distanzangaben, entgegennehmen und abspeichern kann, und welches die durch das Augenpositionsbestimmungsmodul 411 bestimmten Augenpositionen mit abgespeicherten Korrekturwerten korrigiert, bevor sie an die Videozentrale 2 übermittelt werden, so dass der Bildbereich mit der grössten Auflösung, und gegebenenfalls mit dem höchsten Detailgehalt, tatsächlich auf die Fovea 511 projiziert wird. Dadurch können ermittelte Augenpositionen und die Position der Fovea 511 des Benutzers vom Benutzer individuell in Übereinstimmung gebracht werden, wobei die individuellen Korrekturwerte beispielsweise auf einer Chipkarte 45 des Kommunikationsendgeräts 4 gespeichert werden, beispielsweise eine SIM-Karte (Subscriber Identity Module), welche aus dem Kommunikationsendgerät 4 entfernt werden kann. Das Korrekturmodul 43 ist beispielsweise ein programmiertes Softwaremodul, welches auf einem Prozessor des Kommunikationsendgeräts 4, beispielsweise ein Prozessor auf einer Chipkarte 45 des Kommunikationsendgeräts 4, ausgeführt werden kann.

In der Videozentrale 2 entgegengenommene aktuelle, gegebenenfalls korrigierte Augenpositionen, können dort, beispielsweise durch ein Vorausbestimmungsmodul 23 abgespeichert werden. Das Vorausbestimmungsmodul 23, beispielsweise ein programmiertes Softwaremodul, bestimmt aus der Serie der vorgängig abgespeicherten aktuellen Augenpositionen die zu erwartende nächste Augenposition, beispielsweise mittels geeigneten Regressionsfunktionen. Dadurch kann beispielsweise die Anzahl der Rückmeldungen von Augenpositionen vom Kommunikationsendgerät 4 an die Videozentrale 2, insbesondere bei kontinuierlicher Änderung der Augenpositionen des Benutzers, reduziert werden. Um sprunghafte Änderungen der Augenpositionen unmittelbar an die Videozentrale 2 zu übermitteln, kann das Augenpositionsrückmeldemodul 42 im Kommunikationsendgerät 2, beispielsweise eine sprunghafte Differenz zwischen einer ersten bestimmten Augenposition und der darauffolgenden zweiten bestimmten Augenposition detektieren und beispielsweise ab einem vordefinierten Schwellenwert diese zweite bestimmte Augenposition unmittelbar an die Videozentrale 2 übermitteln. In einer weiteren Variante kann das Vorausbestimmungsmodul 23 bei der Vorausbestimmung von erwarteten nächsten Augenpositionen zudem den Inhalt betreffender Videodaten berücksichtigen, so dass beispielsweise die erwartete Änderung der Augenposition mit der Bewegung von grossen und/oder zentralen Objekten in den Videodaten entsprechenden Bildern korreliert. Zur Ausführung dieser letzteren Variante kann es beispielsweise vorteilhaft sein, betreffende Videodaten vorgängig mit geeigneten Bildverarbeitungsmitteln so zu analysieren, dass deren bildlicher Inhalt in abstrakter Form, beispielsweise durch Okjektbezeichnungen, Vektoren und/oder Koordinatenangaben, beschrieben werden kann. Solche abstrakte Inhaltsbeschreibungen können beispielsweise zusammen mit den betreffenden Videodaten in der Datenbank 24 abgespeichert werden und dem Vorausbestimmungsmodul 23 zugeführt werden.

Einem Benutzer kann der Bezug von Videoinformationen beispielsweise direkt auf einem auf der Chipkarte 5 gespeicherten vorausbezahlten Geldbetrag, einem Bankkonto, einer Kreditkarte oder durch Rechnungsstellung, beispielsweise als Teil der Telefonrechnung, belastet werden, wobei beispielsweise pro Zeiteinheit bezogener Videoinformationen, per bezogenem Titel und/oder in Kombination mit einem Abonnement verrechnet wird. Von wirtschaftlichem Interesse kann auch der Verkauf oder die Vermietung von beschriebenen Systemkomponenten sein, beispielsweise ein komplettes beschriebenes Kommunikationsendgerät 4, ein Ausbausatz mit den nötigen Komponenten zum Ausbau eines herkömmlichen Kommunikationsendgeräts zu einem beschriebenen Kommunikationsendgerät 4, welches insbesondere auch einen Datenträger mit darauf gespeicherten programmierten Augenpositionsrückmeldemodul 42 und Korrekturmodul 43 umfasst, oder ein Datenträger mit darauf gespeichertem programmiertem Kommunikationsmodul 21, Videofiltermodul 22 sowie Vorausbestimmungsmodul 23, um einen herkömmlichen Kommunikationsserver, der die vom Kommunikationsmodul 21 benötigten Hardwarekomponenten sowie eine Videodatenbank 24, und/oder einen File-Server umfasst, als beschriebene Videozentrale 2 zu betreiben.

## Patentansprüche

1. System (1) für die Übermittlung und Darstellung von Videodaten, welches System (1) eine Videozentrale (2) mit einem Kommunikationsmodul (21) umfasst, welches System (1) ein Telekommunikationsnetz (3) mit mindestens einem damit verbundenen Kommunikationsendgerät umfasst, wobei die Videozentrale (2) eingerichtet ist, die Videodaten mittels des Kommunikationsmoduls (21) über das Telekommunikationsnetz (3) an das Kommunikationsendgerät (4) zu übertragen, wobei das Kommunikationsendgerät (4) mindestens eine Videoanzeigevorrichtung (41) umfasst, welche empfangene Videodaten für den Benutzer des Kommunikationsendgeräts (4) sichtbar darstellt und welche ein Augenpositionsbestimmungsmodul (411) umfasst, welches aktuelle Augenpositionen des Benutzers bestimmt, und wobei das Kommunikationsendgerät (4) ein Augenpositionsrückmeldemodul (42) umfasst, welches die bestimmten aktuellen Augenpositionen an die Videozentrale (2) überträgt, **dadurch gekennzeichnet,**
**dass** die Videoanzeigevorrichtung (41) eine Virtuelle Retinale Anzeigevorrichtung ist, welche den empfangenen Videodaten entsprechende Bildsignale auf die Retina (51) des Benutzers projiziert,
**dass** die Videozentrale (2) eine Datenbank (24) und/oder einen File-Server umfasst, in denen die Videodaten in digitaler Form gespeichert sind, und
**dass** die Videozentrale (2) ein Videofiltermodul (22) umfasst, welches die gespeicherten Videodaten vor deren Übermittlung auf Grund empfangener aktueller Augenpositionen so filtert, dass den Videodaten entsprechende äussere Bildbereiche, welche auf der Retina (51) ausserhalb der Fovea (511) projiziert werden, eine geringere Auflösung aufweisen als den Videodaten entsprechende innere Bildbereiche, welche auf die Fovea (511) der Retina (51) projiziert werden, und dass die gefilterten Videodaten dementsprechend eine geringere Datenmenge enthalten als ungefilterte Videodaten.

2. System (1) gemäss Anspruch 1, **dadurch gekennzeichnet, dass** das Telekommunikationsnetz (3) ein Mobilnetz umfasst, und dass das Kommunikationsendgerät (4) ein Mobilfunkgerät ist.

3. System (1) gemäss einem der Ansprüche 1 oder 2, **dadurch gekennzeichnet, dass** das Videofiltermodul (22) eine Ausschnittsfunktion (221) umfasst, welche mindestens gewisse der Videodaten, die den äusseren Bildbereichen entsprechen, herausfiltert, so dass der den gefilterten Videodaten entsprechende Bildbereich ein Ausschnitt aus dem den ungefilterten Videodaten entsprechenden Bildbereich ist, welcher Ausschnitt mindestens den inneren Bildbereich enthält.

4. System (1) gemäss einem der Ansprüche 1 bis 3, **dadurch gekennzeichnet, dass** die Videozentrale (2) ein Vorausbestimmungsmodul (23) umfasst, welches vom Augenpositionsbestimmungsmodul (411) bestimmte Augenpositionen abspeichert, und welches eine nächste Augenposition auf Grund dieser abgespeicherten Augenpositionen vorausbestimmt.

5. System (1) gemäss Anspruch 4, **dadurch gekennzeichnet, dass** das Vorausbestimmungsmodul (23) eine nächste Augenposition unter Berücksichtigung der Videodaten vorausbestimmt.

6. System (1) gemäss einem der Ansprüche 1 bis 5, **dadurch gekennzeichnet, dass** es ein Korrekturmodul (43) umfasst, welches vom Benutzer Korrekturwerte entgegennimmt, die entgegengenommenen Korrekturwerte abspeichert, und vom Augenpositionsbestimmungsmodul (411) bestimmte Augenpositionen mit den abgespeicherten Korrekturwerten korrigiert.

7. Verfahren für die Übermittlung und Darstellung von Videodaten, in welchem Verfahren die Videodaten von einer Videozentrale (2) über ein Telekommunikationsnetz (3) an ein Kommunikationsendgerät (4) übertragen und dort durch eine Videoanzeigevorrichtung (41) für den Benutzer des Kommunikationsendgeräts (4) sichtbar dargestellt werden, wobei aktuelle Augenpositionen des Benutzers bestimmt werden, und wobei die bestimmten aktuellen Augenpositionen an die Videozentrale (2) übertragen werden,
**dadurch gekennzeichnet,**
**dass** die Videodaten von einer Datenbank (24) und/oder einem File-Server der Videozentrale (2) bezogen werden, wo die Videodaten in digitaler Form gespeichert sind,
**dass** die Videoanzeigevorrichtung (41) den Videodaten entsprechende Bildsignale auf die Retina (51) des Benutzers projiziert, und
**dass** die Videodaten vor deren Übermittlung in der Videozentrale (2) auf Grund empfangener aktueller Augenpositionen so gefiltert werden, dass den Videodaten entsprechende äussere Bildbereiche, welche auf der Retina (51) ausserhalb der Fovea (511) projiziert werden, eine geringere Auflösung aufweisen als den Videodaten entsprechende innere Bildbereiche, welche auf die Fovea (511) der Retina (51) projiziert werden, und dass die gefilterten Videodaten dementsprechend eine geringere Datenmenge enthalten als ungefilterte Videodaten.

8. Verfahren gemäss Anspruch 7, **dadurch gekennzeichnet, dass** die Übertragung der Videodaten über das Telekommunikationsnetz (3) eine Übertragung über ein Mobilfunknetz umfasst, und dass das Kommunikationsendgerät (4) ein Mobilfunkgerät ist.

9. Verfahren gemäss einem der Ansprüche 7 oder 8, **dadurch gekennzeichnet, dass** mindestens gewisse der Videodaten, die den äusseren Bildbereichen entsprechen, herausgefiltert werden, so dass der den gefilterten Videodaten entsprechende Bildbereich ein Ausschnitt aus dem den ungefilterten Videodaten entsprechenden Bildbereich ist, welcher Ausschnitt mindestens den inneren Bildbereich enthält.

10. Verfahren gemäss einem der Ansprüche 7 bis 9, **dadurch gekennzeichnet, dass** die bestimmten Augenpositionen in der Videozentrale (2) abgespeichert werden, und dass eine nächste Augenposition auf Grund dieser abgespeicherten Augenpositionen vorausbestimmt wird.

11. Verfahren gemäss Anspruch 10, **dadurch gekennzeichnet, dass** eine nächste Augenposition unter Berücksichtigung der Videodaten vorausbestimmt wird.

12. Verfahren gemäss einem der Ansprüche 7 bis 11, **dadurch gekennzeichnet, dass** vom Benutzer eingegebene Korrekturwerte entgegengenommen werden, dass die entgegengenommenen Korrekturwerte abgespeichert werden, und dass die bestimmten Augenpositionen mit den abgespeicherten Korrekturwerten korrigiert werden.

13. Videozentrale (2), welche ein Kommunikationsmodul (21) umfasst, das eingerichtet ist, von Kommunikationsendgeräten (4) Anforderungen für Videodaten über ein Telekommunikationsnetz (3) entgegenzunehmen und angeforderte Videodaten an ein betreffendes Kommunikationsendgerät (4) zu übertragen, **dadurch gekennzeichnet,**
**dass** sie eine Datenbank (24) und/oder einen File-Server umfasst, in denen die Videodaten in digitaler Form gespeichert sind, und
**dass** sie ein Videofiltermodul (22) umfasst, welches die Videodaten vor deren Übermittlung auf Grund von aktuellen Augenpositionen des Benutzers des betreffenden Kommunikationsendgeräts (4), welche Augenpositionen vom betreffenden Kommunikationsendgerät (4) an die Videozentrale (2) übermittelt werden, so filtert, dass den Videodaten entsprechende äussere Bildbereiche, welche auf der Retina (51) ausserhalb der Fovea (511) projiziert werden, eine geringere Auflösung aufweisen als den Videodaten entsprechende innere Bildbereiche, welche auf die Fovea (511) der Retina (51) projiziert werden, und dass die gefilterten Videodaten dementsprechend eine geringere Datenmenge enthalten als ungefilterte Videodaten.

14. Videozentrale (2) gemäss Anspruch 13, **dadurch gekennzeichnet, dass** das Videofiltermodul (22) eine Ausschnittsfunktion (221) umfasst, welche mindestens gewisse der Videodaten, die den äusseren Bildbereichen entsprechen, herausfiltert, so dass der den gefilterten Videodaten entsprechende Bildbereich ein Ausschnitt aus dem den ungefilterten Videodaten entsprechenden Bildbereich ist, welcher Ausschnitt mindestens den inneren Bildbereich enthält.

15. Videozentrale (2) gemäss einem der Ansprüche 13 oder 14, **dadurch gekennzeichnet, dass** sie ein Vorausbestimmungsmodul (23) umfasst, welches vom betreffenden Kommunikationsendgerät (4) übermittelte Augenpositionen abspeichert, und welches eine nächste Augenposition auf Grund dieser abgespeicherten Augenpositionen vorausbestimmt.

16. Videozentrale (2) gemäss Anspruch 15, **dadurch gekennzeichnet, dass** das Vorausbestimmungsmodul (23) eine nächste Augenposition unter Berücksichtigung der Videodaten vorausbestimmt.

## Claims

1. A system (1) for transmitting and presenting video data, which system (1) includes a video centre (2) with a communications module (21), which system (1) includes a telecommunications network (3) with at least one communications terminal connected thereto, the video centre (2) being set up to transmit the video data by means of the communications module (21) via the telecommunications network (3) to the communications terminal (4), the communications terminal (4) comprising at least one display device (41) which present received video data to the user of the communications terminal (4) in a visible way and which includes an eye position tracking module (411) which determines current eye positions of the user, and the communications terminal (4) including an eye position feedback module (42) which transmits the determined actual eye positions to the video centre (2), **characterised in that**
the video display device (41) is a virtual retinal display device which projects picture signals corresponding to the received video data onto the retina (51) of the user,
the video centre (2) includes a database (24) and/or a file server in which the video data are stored in digital form, and
the video centre (2) includes a video filter module (22), which filter the stored video data , prior to their transmission, on the basis of received current eye positions such that outer picture regions, corresponding to the video data, which are projected on the retina (51) outside the fovea (511) have a lower resolution than inner picture regions, corresponding to the video data, which are projected on the retina (51), and the filtered video data therefore contain a lesser quantity of data than the unfiltered video data.

2. The system (1) according to claim 1, **characterised in that** the telecommunications network (3) comprises a mobile network, and the communications terminal (4) is a mobile radio device.

3. The system (1) according to one of the claims 1 or 2, **characterised in that** the video filter module (22) has a cut-out function (221) which filters out at least certain of the video data corresponding to the outer picture regions so that the picture region corresponding to the filtered video data is a section from the picture region corresponding to the unfiltered video data, which section contains at least the inner picture region.

4. The system (1) according to one of the claims 1 to 3, **characterised in that** the video centre (2) includes a prediction module (23), which stores eye positions determined by the eye position tracking module (411), and which predicts a subsequent eye position on the basis of these stored eye positions.

5. The system (1) according to claim 4, **characterised in that** the prediction module (23) predicts a subsequent eye position taking into consideration the video data.

6. The system (1) according to one of the claims 1 to 5, **characterised in that** it includes a correction module (43) which receives correction values from the user, stores the received correction values, and corrects eye positions, determined by the eye position tracking module (411), with the stored correction values.

7. A method for transmitting and presenting video data in which method the video data are transmitted from a video centre (2) over a telecommunications network (3) to a communications terminal (4) and are presented there by a video display device (41) in a visible way for the user of the communications terminal (4), current eye positions of the user being determined and the determined current eye positions being transmitted to the video centre (2), **characterised in that**
- the video data are obtained from a database (24) and/or from a file server of the video centre (2), where the video data are stored in digital form,
- the video display device (41) projects picture signals corresponding to the video data onto the retina (51) of the user, and
- the video data are filtered in the video centre (2), prior to their transmission, on the basis of received current eye positions such that outer picture regions, corresponding to the video data, which are projected on the retina (51) outside the fovea (511) have a lower resolution than inner picture regions, corresponding to the video data, which are projected on the fovea (511) of the retina (51), and the filtered video data therefore contain a lesser quantity of data than the unfiltered video data.

8. The method according to claim 7, **characterised in that** the transmission of the video data over the telecommunications network (3) comprises a transmission over a mobile radio network and the communications terminal (4) is a mobile radio device.

9. The method according to one of the claims 7 or 8, **characterised in that** at least certain of the video data corresponding to the outer picture regions are filtered out so that the picture region corresponding to the filtered video data is a section from the picture region corresponding to the unfiltered video data, which section contains at least the inner picture region.

10. The method according to one of the claims 7 to 9, **characterised in that** the determined eye positions are stored in the video centre (2), and a subsequent eye position is predicted on the basis of these stored eye positions.

11. The method according to claim 10, **characterised in that** a subsequent eye position is predicted taking into consideration the video data.

12. The method according to one of the claims 7 to 11, **characterised in that** correction values entered by the user are received, the received correction values are stored, and the determined eye positions are corrected with the stored correction values.

13. A video centre (2) which includes a communications module (21), which is set up to receive requests for video data from communications terminals (4) over a telecommunications network (3) and transmit requested video data to a respective communications terminal (4), **characterised in that**
it includes a database (24) and/or a file server in which the video data are stored in digital form, and
it includes a video filter module (22) which filters video data, prior to their transmission, on the basis of current eye positions of the user of the respective communications terminal (4), which eye positions are transmitted from the respective communications terminal (4) to the video centre (2), such that outer picture regions, corresponding to the video data, which are projected onto the retina (51) outside the fovea (511), have a lower resolution than inner picture regions, corresponding to the video data, which are projected on the fovea (511) of the retina (51), and the filtered video data therefore contain a lesser quantity of data than the unfiltered video data.

14. The video centre (2) according to claim 13, **characterised in that** the video filter module (22) has a cut-out function (221) which filters out at least certain of the video data corresponding to the outer picture regions so that the picture region corresponding to the filtered video data is a section from the picture region corresponding to the unfiltered video data, which section contains at least the inner picture region.

15. The video centre (2) according to one of the claims 13 or 14, **characterised in that** it includes a prediction module (23) which stores eye positions transmitted by the respective communications terminal (4), and which predicts a subsequent eye position on the basis of these stored eye positions..

16. The video centre (2) according to claim 15, **characterised in that** the prediction module (23) predicts a subsequent eye position taking into consideration the video data.

## Revendications

1. Système (1) de transmission et de représentation de données vidéo comprenant une centrale vidéo (2) qui possède un module de communication (21), et comprenant un réseau de télécommunications (3), avec au moins un terminal de communication qui lui est relié, la centrale vidéo (2) étant réalisée de manière à transmettre les données vidéo au terminal de communication (4) au moyen du module de communica-tion (21) et en passant par le réseau de télécommunications (3), le terminal de communica-tion (4) possédant au moins un dispositif de représentation vidéo (41) qui représente les données vidéo reçues de manière visible pour l'utilisateur du terminal de communication (4), et qui possède un module de détermination de la position des yeux (411) qui détermine les positions des yeux de l'utilisateur à l'instant considéré, et le terminal de communication (4) possédant un module de répétition de la position des yeux (42) qui transmet à la centrale vidéo (2) les positions des yeux déterminées à l'instant considéré, **caractérisé en ce que**
le dispositif de représentation vidéo (41) est un dispositif de représentation rétinienne virtuelle qui projette sur la rétine (51) de l'utilisateur des signaux image correspondant aux données vidéo reçues,
la centrale vidéo (2) comprend une banque de données (24) ou un serveur de fichiers, ou les deux, où les données vidéo sont stockées sous forme numérique, et que
la centrale vidéo (2) comprend un module de filtrage vidéo (22) qui, avant de transmettre les données vidéo stockées, les filtre, sur la base de positions des yeux à l'instant considéré qu'il a reçues, de telle manière que les zones extérieures des images correspondant aux données vidéo et qui sont projetées sur la rétine (51) en dehors de la fovéa (511) aient une moindre résolution que les zones intérieures des images correspondant aux données vidéo et qui sont projetées sur la fovéa (511) de la rétine (51), et que les données vidéo filtrées contiennent par conséquent une quantité de données plus petite que les données vidéo non filtrées.

2. Système (1) selon la première revendication, **caractérisé en ce que** le réseau de télécommunications (3) comprend un réseau mobile et **en ce que** le terminal de communication (4) est un appareil radio mobile.

3. Système (1) selon la revendication 1 ou 2, **caractérisé en ce que** le module de filtrage vidéo (22) comprend une fonction de cadrage (221) qui élimine au moins certaines des données vidéo qui correspondent aux zones extérieures des images, de telle sorte que la zone des images correspondant aux données vidéo filtrées est une partie de la zone des images correspondant aux données vidéo non filtrées, partie qui contient au moins la zone intérieure des images.

4. Système (1) selon l'une des revendications 1 à 3, **caractérisé en ce que** la centrale vidéo (2) comprend un module de prévision (23) qui met en mémoire des positions des yeux déterminées par le module de détermination de la position des yeux (411) et prévoit une prochaine position des yeux sur la base de ces positions des yeux mises en mémoire.

5. Système (1) selon la revendication 4, **caractérisé en ce que** le module de pré-vision (23) prévoit une prochaine position des yeux en tenant compte des données vidéo.

6. Système (1) selon l'une des revendications 1 à 5, **caractérisé en ce qu'**il comprend un module correcteur (43) qui reçoit de l'utilisateur des valeurs de correction, les met en mémoire et corrige les positions des yeux déterminées par le module de détermination de la position des yeux (411) au moyen des valeurs de correction mises en mémoire.

7. Procédé de transmission et de représentation de données vidéo, avec lequel une centrale vidéo (2) transmet les données vidéo, en passant par un réseau de télécommu-nications (3), à un terminal de communication (4) où un dispositif de représentation vidéo (41) les représente de manière visible pour l'utilisateur du terminal de communication (4), les positions des yeux de l'utilisateur aux instants considérés étant déterminées et le résultat étant transmis à la centrale vidéo (2), **caractérisé en ce que**
les données vidéo sont obtenues d'une banque de données (24) ou d'un serveur de fichiers de la centrale vidéo (2), ou des deux, où elles sont stockées sous forme numérique,
le dispositif de représentation vidéo (41) projette sur la rétine (51) de l'utilisateur des signaux image correspondant aux données vidéo, et que,
avant d'être transmises, les données vidéo sont filtrées, dans la centrale vidéo (2), sur la base de positions des yeux aux instants considérés qu'elle a reçues, de telle manière que les zones extérieures des images correspondant aux données vidéo et projetées sur la rétine (51) en dehors de la fovéa (511) présentent une résolution inférieure à celle des zones intérieures des images correspondant aux données vidéo et qui sont projetées sur la fovéa (511) de la rétine (51), et que, par conséquent, les données vidéo filtrées contiennent une quantité de données moins importante que les données vidéo non filtrées.

8. Procédé selon la revendication 7, **caractérisé en ce que** la transmission des données vidéo par l'intermédiaire du réseau de télécommunications (3) comprend une transmission par l'intermédiaire d'un réseau radio mobile, et que le terminal de communication (4) est un appareil radio mobile.

9. Procédé selon la revendication 7 ou 8, **caractérisé en ce qu'**au moins certaines des données vidéo qui correspondent aux zones extérieures des images sont éliminées par filtrage, de telle sorte que la zone des images correspondant aux données vidéo filtrées est une partie de la zone des images correspondant aux données vidéo non filtrées, cette partie contenant au moins la zone intérieure des images.

10. Procédé selon l'une des revendications 7 à 9, **caractérisé en ce que** les positions des yeux déterminées sont mises en mémoire dans la centrale vidéo (2), et **en ce qu'**une prochaine position des yeux est prévue sur la base de ces positions des yeux mises en mémoire.

11. Procédé selon la revendication 10, **caractérisé en ce qu'**une prochaine position des yeux est prévue en tenant compte des données vidéo.

12. Procédé selon l'une des revendications 7 à 11, **caractérisé en ce que** des valeurs correctrices introduites par l'utilisateur sont reçues, que les valeurs correctrices reçues sont mises en mémoire et que les positions des yeux déterminées sont corrigées au moyen des valeurs correctrices mises en mémoire.

13. Centrale vidéo (2) comprenant un module de communication (21) qui est conçu pour recevoir par l'intermédiaire d'un réseau de télécommunications (3) des demandes de données vidéo provenant de terminaux de communication (4) et pour envoyer les données vidéo demandées à un terminal de communication (4) correspondant, **caractérisée en ce qu'**elle
comprend une banque de données (24) ou un serveur de dossiers, ou les deux, dans lesquels les données vidéo sont stockées sous forme numérique, et **en ce qu'**elle
comprend un module de filtrage vidéo (22) qui, avant la transmission des données vidéo, les filtre, sur la base de positions des yeux de l'utilisateur du terminal de communication (4) aux instants considérés, positions des yeux que le terminal de communica-tion (4) considéré transmet à la centrale vidéo (2), de telle manière que les zones exté-rieures des images correspondant aux données vidéo, et qui sont projetées sur la rétine (51) en dehors de la fovéa (511), ont une résolution inférieure à celle des zones intérieures des images correspondant aux données vidéo et projetées sur la fovéa (511) de la rétine (51), et que les données vidéo filtrées, par conséquent, contiennent moins de données que les données vidéo non filtrées.

14. Centrale vidéo (2) selon la revendication 13, **caractérisée en ce que** le module de filtrage vidéo (22) comprend une fonction de cadrage (221) qui élimine par filtrage au moins certaines des données vidéo correspondant aux zones extérieures des images, de telle sorte que la zone des images correspondant aux données vidéo filtrées est une partie de la zone des images correspondant aux données vidéo non filtrées, partie qui contient au moins la zone intérieure des images.

15. Centrale vidéo (2) selon la revendication 13 ou 14, **caractérisée en ce qu'**elle comprend un module de prévision (23) qui met en mémoire les positions des yeux que lui transmet le terminal de communication (4) considéré et qui, sur la base de ces positions des yeux mises en mémoire, prévoit une prochaine position des yeux.

16. Centrale vidéo (2) selon la revendication 15, **caractérisée en ce que** le module de prévision (23) prévoit une prochaine position des yeux en tenant compte des données vidéo.
